(19) Europäisches Patentamt
European Patent Office
Office européen des brevets

(11) **EP 3 953 221 B1**

(12) **EUROPÄISCHE PATENTSCHRIFT**

(45) Veröffentlichungstag und Bekanntmachung des Hinweises auf die Patenterteilung:
**18.03.2026 Patentblatt 2026/12**

(21) Anmeldenummer: **20718578.6**

(22) Anmeldetag: **01.04.2020**

(51) Internationale Patentklassifikation (IPC):
**B60T 7/04** (2006.01)  **B60T 13/66** (2006.01)
**B60T 13/68** (2006.01)

(52) Gemeinsame Patentklassifikation (CPC):
**B60T 13/665; B60T 7/042; B60T 13/686;**
B60T 2220/04; B60T 2270/404; B60T 2270/413;
B60T 2270/82

(86) Internationale Anmeldenummer:
**PCT/EP2020/059196**

(87) Internationale Veröffentlichungsnummer:
**WO 2020/207871 (15.10.2020 Gazette 2020/42)**

(54) **VERFAHREN ZUM BETRIEB EINER BREMSANLAGE EINES FAHRZEUGS UND BREMSANLAGE**

METHOD FOR OPERATING A BRAKING SYSTEM OF A VEHICLE, AND BRAKING SYSTEM

PROCÉDÉ POUR FAIRE FONCTIONNER UNE INSTALLATION DE FREINAGE D'UN VÉHICULE ET INSTALLATION DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2019 DE 102019205088**
**09.10.2019 DE 102019215422**

(43) Veröffentlichungstag der Anmeldung:
**16.02.2022 Patentblatt 2022/07**

(73) Patentinhaber: **AUMOVIO Germany GmbH**
**60488 Frankfurt am Main (DE)**

(72) Erfinder:
• **ULLRICH, Thorsten**
**60488 Frankfurt am Main (DE)**
• **BRENN, Martin**
**60488 Frankfurt am Main (DE)**
• **BAECHLE, Martin**
**60488 Frankfurt am Main (DE)**

(74) Vertreter: **Aumovio Corporation**
**AUMOVIO Germany GmbH**
**Taunusstraße 36**
**80807 München (DE)**

(56) Entgegenhaltungen:
WO-A1-01/14195      WO-A1-2011/091996
WO-A1-2018/078560   DE-A1- 102007 035 326
DE-A1- 19 510 525   US-A1- 2018 194 353
US-A1- 2018 215 368

**Beschreibung**

Die Erfindung betrifft ein Verfahren zum Betrieb einer Bremsanlage eines Fahrzeugs und eine Bremsanlage.

Moderne Fahrzeugkonzepte benötigen Bremssysteme nach dem brake-by-wire Prinzip. Diese erlauben die Erfassung des Bremswunsches (Bremsanforderung) durch eine geeignete Sensorik und die Ausführung dieses Bremswunsches durch einen elektronisch steuerbaren Aktuator der Reibbremse oder auch durch einen elektrischen Antriebsstrang insbesondere zum Zweck der Energierückgewinnung (Rekuperation).

Hierzu beschreibt beispielsweise die DE 10 2007 035 326 A1 eine Bremsvorrichtung, insbesondere eine elektrisch betätigte Kfz-Bremse mit einem Bremspedalsensor zum Aufnehmen eines Bremswunsches, ein mit dem Bremspedalsensor verbundenes Steuergerät und wenigstens einem Bremsaktuator, der vom Steuergerät entsprechend dem Bremswunsch angesteuert wird.

Eine redundante Erfassung der Bremsanforderung ist zum Beispiel aus WO 01/14195 A1 und DE 195 10 525 A1 bekannt.

Weiterhin sind Systeme nach dem brake-by-wire Prinzip geeignet, eine durch einen Autopiloten ("virtueller Fahrer") ausgelöste Bremsung durchzuführen, unabhängig von der Betätigung des Bremspedals durch den menschlichen Fahrer. Brake-by-wire Systeme, die heute im Serieneinsatz sind, verfügen üblicherweise über eine hydraulische Rückfallebene, d.h. eine Betriebsart, in der das Bremspedal mit den Radbremsen hydraulisch und/oder mechanisch gekoppelt ist.

In Anwendungsfällen des automatisierten Fahrens ist die hydraulische Rückfallebene nicht ausreichend, so dass für diese Anwendungen ein Backup Bremssystem verwendet wird.

Mit diesem Systemansatz ist jedoch in der Rückfallebene kein echter by-wire Betrieb möglich, da ein möglicherweise ungewolltes Betätigen des Bremspedals zu einem unmittelbaren Druckaufbau in den Radbremsen führt.

Der vorliegenden Erfindung liegt die Aufgabe zugrunde, ein verbessertes Verfahren zum Betrieb einer Bremsanlage mit hydraulisch und mechanisch entkoppeltem Bremspedal eines Fahrzeugs und eine verbesserte Bremsanlage mit hydraulisch und mechanisch entkoppeltem Bremspedal bereitzustellen.

Diese Aufgabe wird mit dem Verfahren gemäß Anspruch 1 und der Bremsanlage nach Anspruch 9 gelöst.

In einem ersten Aspekt betrifft die Erfindung ein Verfahren zum Betrieb einer Bremsanlage eines Fahrzeugs, wobei die Bremsanlage ein primäres hydraulisches Bremssystem und eine hydraulisch von dem primären Bremssystem entkoppelte Bremsbetätigungseinheit aufweist, wobei die Bremsbetätigungseinheit wenigstens zwei Sensoranordnungen aufweist, die dazu ausgebildet sind, unabhängig voneinander eine Bremsanforderung beschreibende Betätigungsinformationen der Bremsbetätigungseinheit zu erfassen. Das Verfahren weist dabei das Ermitteln einer ersten Betätigungsinformation durch eine erste der Sensoranordnungen, das Ermitteln einer zweiten Betätigungsinformation durch eine zweite der Sensoranordnungen, das Prüfen, ob die ermittelten Betätigungsinformationen jeweils gültig sind, das Prüfen, ob die ermittelten Betätigungsinformationen untereinander plausibel sind, sofern die Betätigungsinformationen gültig sind, und das Umsetzen der Bremsanforderung gemäß den Betätigungsinformationen und/oder Ausgeben einer Warnung und/oder Durchführen eines vordefinierten Bremsmanövers durch die Bremsanlage, in Abhängigkeit der Gültigkeit und Plausibilität der Betätigungsinformationen, wobei das Fahrzeug mit einer vorbestimmten Verzögerung bis zum Stillstand verzögert und eine Warnung ausgegeben wird, wenn ermittelt wird, dass beide Betätigungsinformationen ungültig sind, oder beide Betätigungsinformationen gültig, aber nicht plausibel sind. Die Gültigkeit der Betätigungsinformation wird dabei anhand einer sensorspezifischen Kennlinienfunktion bestimmt.

Beispielsweise kann die die vorbestimmte Verzögerung zwischen 1 m/s$^2$ und 4 m/s$^2$, insbesondere zwischen 2 m/s$^2$ und 3 m/s$^2$, insbesondere 2,44 m/s$^2$ betragen. Auch kann vorgesehen sein, dass insbesondere eine optische Warnung, ausgegeben wird, insbesondere durch Aktivierung einer Warnleuchte.

Die Prüfung, ob die ermittelten Betätigungsinformationen jeweils gültig sind, und/oder ob die ermittelten Betätigungsinformationen untereinander plausibel sind, wird dabei vorzugsweise durch das primäre Bremssystem durchgeführt. Ferner erfolgt gegebenenfalls das Umsetzen der Bremsanforderung und/oder die Durchführung eines vordefinierten Bremsmanövers vorzugsweise durch das primäre Bremssystem.

Unter einem "Bremssystem" ist dabei eine hydraulische Anordnung zu verstehen, die zumindest dazu ausgebildet ist, auf Grundlage einer Bremsanforderung einen hydraulischen Druck zu erzeugen und diesen, vorzugsweise radindividuell, zu modulieren, beispielsweise um eine Regelfunktion wie eine Anti-Blockier-Funktion zu realisieren. Dementsprechend weist ein solches Bremssystem zumindest eine Druckbereitstellungseinrichtung, beispielsweise eine elektromotorisch betriebene Pumpe, und eine Ventilanordnung auf.

Durch das erfindungsgemäße Verfahren ist es möglich, Betätigungsinformationen, die von unterschiedlichen Sensoranordnungen ermittelt werden, gleichzeitig zu nutzen und gegebenenfalls eine Fehlfunktion der Bremsanlage aus der Zusammenschau der Betätigungsinformationen zu ermitteln. Sollte dabei eine Fehlfunktion anhand ungültiger und/oder nicht plausibler Betätigungsinformationen erkannt werden, werden gemäß dem erfindungsgemäßen Verfahren entsprechende Reaktionen der Bremsanlage ausgelöst.

Vorzugsweise ist dabei vorgesehen, dass, wenn beide Betätigungsinformationen gültig und plausibel sind, die Bremsanforderung umgesetzt wird.

Ist genau eine der Betätigungsinformationen ungültig, ist vorzugsweise vorgesehen, dass die Bremsanforderung nach wie vor umgesetzt, jedoch zusätzlich eine Warnung, insbesondere eine optische Warnung, ausgegeben wird, insbesondere durch Aktivierung einer Warnleuchte. Die Warnung zeigt dabei an, dass eine Fehlfunktion der Bremsanlage vorliegt und soll den Fahrzeugführer veranlassen, das Fahrzeug entsprechend zu überprüfen, oder eine solche Überprüfung zu veranlassen. Dabei wird vorzugsweise die Bremsanforderung aus der gültigen Betätigungsinformation bestimmt, während die ungültig Betätigungsinformation bei der Bestimmung der Bremsanforderung ignoriert wird. Dabei kann ferner vorgesehen sein, dass eine maximale Fahrzeuggeschwindigkeit und/oder eine Fahrzeugbeschleunigung limitiert und/oder ein Motor- oder Generatorschleppmoment beim Lösen eines Fahrpedals des Fahrzeugs erhöht wird, wenn genau eine Betätigungsinformation als ungültig erkannt wurde.

Um den Verarbeitungsaufwand für das beschriebene Verfahren zu minimieren ist ferner vorzugsweise vorgesehen, dass nur dann geprüft wird, ob die ermittelten Betätigungsinformationen untereinander plausibel sind, wenn wenigstens eine Betätigungsinformation, und insbesondere beide Betätigungsinformationen, gültig sind. So ist bei wenigstens einer ungültigen Betätigungsinformation eine weitere Prüfung auf die Plausibilität der Betätigungsinformationen nicht sinnvoll und kann folglich entfallen.

Die Bremsanlage weist ferner ein sekundäres hydraulisches Bremssystem auf, wobei die erste Sensoranordnung mit dem primären Bremssystem und die zweite Sensoranordnung mit dem sekundären Bremssystem zur Datenübertragung und/oder Signalübertragung verbunden ist. Folglich handelt es sich in dieser Konstellation um eine redundant ausgelegte Bremsanlage mit zwei separaten Bremssystemen, die unabhängig voneinander dazu ausgebildet sind, in Abhängigkeit einer Bremsanforderung die Radbremsen eines Fahrzeugs mit einem Bremsdruck zu beaufschlagen. Vorzugsweise handelt es sich dabei sowohl bei dem ersten Bremssystem, als auch bei dem zweiten Bremssystem jeweils um ein elektrohydraulisches Bremssystem.

Dabei ist nach einer weiteren Ausführungsform vorgesehen, dass das sekundäre Bremssystem dazu ausgebildet ist, bei einem Ausfall des primären Bremssystems das Fahrzeug gemäß einer aus der zweiten Betätigungsinformation bestimmten Bremsanforderung zu verzögern. Folglich ist das zweite Bremssystem bei der Umsetzung einer Bremsanforderung nicht von dem ersten Bremssystem abhängig, sondern kann das erste Bremssystem bei einem Ausfall vollumfänglich ersetzen.

Um zu gewährleisten, dass das erfindungsgemäße Verfahren in dieser Konstellation zentralisiert und vorzugsweise durch das erste Bremssystem durchgeführt werden kann, ist nach einer weiteren Ausführungsform vorgesehen, dass das primäre Bremssystem und das sekundäre Bremssystem zur Datenübertragung miteinander verbunden und dazu ausgebildet sind, von den Sensoranordnungen empfangene Betätigungsinformationen miteinander auszutauschen. Dementsprechend kann die durch die zweite Sensoranordnung ermittelte zweite Betätigungsinformation an das primäre Bremssystem übermittelt und dort hinsichtlich dessen Gültigkeit und Plausibilität gegenüber der ersten Betätigungsinformation überprüft werden.

Es kann dabei jedoch auch vorgesehen sein, dass das zweite Bremssystem bereits die Prüfung der Gültigkeit der zweiten Betätigungsinformation durchführt und das entsprechende Ergebnis an das erste Bremssystem übermittelt. Hierzu wird vorzugsweise bei Ermittlung, dass eine Betätigungsinformation nicht gültig ist, ein der Betätigungsinformation zugeordneter Gültigkeits-Marker erzeugt. Vorzugsweise ist/sind dabei das primäre und/oder sekundäre Bremssystem dazu ausgebildet, solche Gültigkeits-Marker für Betätigungsinformationen miteinander auszutauschen. Auf Grundlage der ausgetauschten Gültigkeits-Marker kann dann beispielsweise das erste Bremssystem prüfen, ob eine nachfolgende Prüfung auf Plausibilität überhaupt durchgeführt werden soll, oder aufgrund der fehlenden Gültigkeit einer oder beider Betätigungsinformationen entfallen kann. Dementsprechend ist vorzugsweise vorgesehen, dass das primäre und/oder das sekundäre Bremssystem dazu ausgebildet ist/sind, erzeugte und/oder empfangene Gültigkeits-Marker bei der lokalen Durchführung des Verfahrens zu berücksichtigen.

Die Prüfung der Gültigkeit der ersten oder zweiten Betätigungsinformation oder beider Betätigungsinformationen kann dabei grundsätzlich durch das erste Bremssystem, das zweite Bremssystem oder beide Bremssysteme parallel erfolgen. Gleichermaßen kann auch die Prüfung der Plausibilität der Betätigungsinformationen durch das erste Bremssystem, das zweite Bremssystem oder beide Bremssysteme erfolgen.

Zur Steigerung der Betriebssicherheit einer nach dem erfindungsgemäßen Verfahren betriebenen Bremsanlage ist ferner vorgesehen, dass das primäre Bremssystem oder das sekundäre Bremssystem eine dritte Sensoranordnung zur Bestimmung des durch das primäre Bremssystem erzeugten Bremsmoments aufweist, wobei das sekundäre Bremssystem dazu ausgebildet ist, die durch die dritte Sensoranordnung ermittelte Sensorinformationen auszulesen. Beispielsweise kann es sich bei der dritten Sensoranordnung um einen Drucksensor handeln. So kann das Bremsmoment aus einem durch den Drucksensor ermittelten Systemdruck ermittelt werden.

Gemäß der Erfindung ist das zweite Bremssystem jederzeit in der Lage aus der Zusammenschau der zweiten Betätigungsinformation und dem in dem ersten Bremskreis erzeugten Bremsmoment zu erkennen, ob das erste Bremssystem nach wie vor so funktioniert wie vorgesehen. Wird dabei durch das zweite Bremssystem erkannt, dass das durch das erste Bremssystem bereitgestellte Bremsmoment nicht mit einer aus der zweiten und/oder der ersten Betätigungsinformation abgeleiteten Bremsanforderung übereinstimmt, kann beispielsweise vorgesehen sein, dass das zweite Bremssystem eine Warnung an den Fahrzeugführer ausgibt. Ferner kann das zweite Bremssystem dazu ausgebildet sein, in einem solchen Fall das Fahrzeug kontrolliert, mit einer definierten Verzögerung zum Stehen zu bringen.

Hieran anknüpfend ist nach der Erfindung ferner vorgesehen, dass das sekundäre Bremssystem bei einer Unterbrechung der Kommunikation mit dem primären Bremssystem prüft, ob die Sensorinformationen zu einer aus der zweiten Betätigungsinformation ermittelten Bremsanforderung passt, wobei in dem Fall, dass die Sensorinformation nicht zu der aus der zweiten Betätigungsinformation ermittelten Bremsanforderung passt, das sekundäre Bremssystem die aus der zweiten Betätigungsinformation abgeleitete Bremsanforderung umsetzt. Folglich verzögert in diesem Fall das zweite Bremssystem das Fahrzeug vollständig unabhängig von dem ersten Bremssystem. Hierzu ist das zweite Bremssystem vorzugsweise dazu ausgebildet, die Radbremsen einer Vorderachse des Fahrzeugs mit einem Bremsdruck zu beaufschlagen. Dies ist insbesondere vorteilhaft, da üblicherweise die größte Kraftübertragung bei einem Bremsmanöver über die Vorderräder eines Fahrzeugs erfolgt.

Nach einer bevorzugten Ausführungsform ist ferner vorgesehen, dass wenn beide Betätigungsinformationen gültig und plausibel sind, die Bremsanforderung nur aus der ersten Betätigungsinformation abgeleitet wird. Die zweite Betätigungsinformation dient in diesem Fall lediglich zur Überprüfung der Funktionsfähigkeit der Bremsanlage einerseits und zur Plausibilisierung der ersten Betätigungsinformation andererseits.

In einer hierzu alternativen Ausführungsform ist hingegen vorgesehen, dass die Bremsanforderung aus der ersten und der zweiten Betätigungsinformation bestimmt wird, wobei eine Gewichtung der ersten und zweiten Betätigungsinformation bei der Bestimmung der Bremsanforderung von der Stärke der Bremsanforderung abhängt. So kann vorgesehen sein, dass beispielsweise bei einem geringen Betätigungsgrad der Bremsbetätigungseinheit die erste Betätigungsinformation bei der Bestimmung der Bremsanforderung gewichtet wird, während ab einem gewissen Betätigungsgrad die zweite Betätigungsinformation stärker gewichtet wird. Die Gewichtung ist dabei beispielsweise abhängig von der Art der Sensoranordnung. So kann es vorkommen, dass ein erster Typ von Sensoranordnung für geringe Betätigungsgrade verlässlichere Werte liefert, als ein zweiter Typ von Sensoranordnung, während der zweite Typ von Sensoranordnung bei höheren Betätigungsgrade verlässlichere, oder feiner abgestufte Werte für die Betätigungsinformation liefert.

Zur Bestimmung der Gültigkeit einer Betätigungsinformation ist erfindungsgemäß vorgesehen, dass die Gültigkeit einer Betätigungsinformation anhand einer sensorspezifischen Kennlinienfunktion bestimmt wird. Beispielsweise kann hierzu in einer Kennlinie vorgegeben werden, welche typischen Sensorsignale von den Sensoranordnungen zu erwarten, bzw. für diese Sensoranordnungen zulässig sind. Sofern eine empfangene Betätigungsinformation anhand der Kennlinie als zulässig erkannt wird, wird die Betätigungsinformation als "gültig" gekennzeichnet. Wird hingegen eine empfangene Betätigungsinformation anhand der Kennlinie als unzulässig erkannt, wird das Betätigungsinformation dementsprechend als "ungültig" gekennzeichnet.

Die Plausibilität der Betätigungsinformationen wird nach einer weiteren Ausführungsform dadurch ermittelt, indem geprüft wird, ob eine aus der ersten Betätigungsinformation abgeleitete Bremsanforderung innerhalb einer festgelegten Toleranz um eine aus der zweiten Betätigungsinformation abgeleiteten Bremsanforderung liegt. Nur, wenn die Bremsanforderungen jeweils gegenseitig innerhalb der vorgegebenen Toleranzen liegen, werden die Betätigungsinformationen als plausibel anerkannt. Wenn die Bremsanforderungen hingegen außerhalb der Toleranzen liegen, ist davon auszugehen, dass sich die ermittelten Betätigungsinformationen widersprechen, sodass die Betätigungsinformationen als nicht plausibel gewertet werden. Vorzugsweise ist dabei vorgesehen, dass die Toleranz von Messtoleranzen der Sensoranordnungen und/oder sensorspezifischen Kennlinienfunktionen abhängt.

Zur Steigerung der Betriebssicherheit der Bremsanlage ist/sind dabei vorzugsweise die erste Sensoranordnung und/oder die zweite Sensoranordnung und/oder die dritte Sensoranordnung jeweils redundant ausgelegt. Ferner weist vorzugsweise wenigstens eine der Sensoranordnungen, insbesondere die erste und zweite Sensoranordnung, insbesondere alle Sensoranordnungen, jeweils redundante Signalpfade zur Übermittlung von Betätigungsinformationen an das primäre und/oder sekundäre Bremssystem auf.

Um eine Unabhängigkeit der von den Sensoranordnungen ermittelten Betätigungsinformationen voneinander zu gewährleisten, ist nach einer weiteren Ausführungsform vorgesehen, dass die erste Sensoranordnung eine Betätigungsinformation aus einer ersten physikalischen Messgröße und die zweite Sensoranordnung eine Betätigungsinformation aus einer zweiten physikalischen Messgröße ableitet, wobei die erste physikalische Messgröße sich von der zweiten physikalischen Messgröße unterscheidet. So kann gewährleistet werden, dass sich die Messungen, welche zu der Bestimmung der jeweiligen Betätigungsinformation führen, nicht gegenseitig beeinflussen. So wäre es bei einer gegenseitigen Beeinflussung der Sensoranordnungen möglich, dass sich ein systematischer Fehler in beiden Sensoranordnungen gleichermaßen niederschlägt, sodass beide Betätigungsinformationen nach wie vor gültig und plausibel erscheinen, obwohl beide Betätigungsinformationen fehlerhaft sind.

Demgemäß kann vorgesehen sein, dass die ersten und/oder zweite Sensoranordnung eine Betätigungsinformation aus einem von einem Bremspedal zurückgelegten Weg ermittelt, und/oder aus einem Drehwinkel eines Hebelarms ermittelt, an dem das Bremspedal gelagert ist. Ferner kann vorgesehen sein, dass die erste und/oder zweite Sensoranordnung eine Betätigungsinformation aus einer auf das Bremspedal ausgeübten Kraft und/oder aus einem aufgrund der Betätigung des Bremspedals in der Bremsbetätigungseinheit erzeugten hydraulischem Druck ermittelt.

Zur Steigerung der Ausfallsicherheit der Bremsanlage ist dabei ferner vorzugsweise vorgesehen, dass die Bremsanlage eine erste Energieversorgung zur Versorgung des primären Bremssystems und der ersten Sensoranordnung und/oder eine zweite Energieversorgung zur Versorgung des sekundären Bremssystems und der zweiten Sensoranordnung aufweist.

**In** einem weiteren Aspekt betrifft die Erfindung eine Bremsanlage für ein Fahrzeug mit einem primären hydraulischen Bremssystem und einer hydraulisch von dem primären Bremssystem entkoppelten Bremsbetätigungseinheit, wobei die Bremsbetätigungseinheit wenigstens zwei Sensoranordnungen aufweist, die dazu ausgebildet sind, unabhängig voneinander eine Bremsanforderung beschreibende Betätigungsinformationen der Bremsbetätigungseinheit zu erfassen, wobei das primäre Bremssystem und die Bremsbetätigungseinheit dazu ausgebildet sind, das zuvor beschriebene Verfahren durchzuführen.

Dabei ist nach einer Ausführungsform vorgesehen, dass die Bremsanlage ein sekundäres hydraulisches Bremssystem aufweist, wobei die erste Sensoranordnung mit dem primären Bremssystem und die zweite Sensoranordnung mit dem sekundären Bremssystem zur Datenübertragung verbunden ist. Vorzugsweise sind dabei das primäre und das sekundäre Bremssystem dazu ausgebildet, Daten der ersten Sensoranordnung und Daten der zweiten Sensoranordnungen, insbesondere Betätigungsinformationen, auszutauschen. In diesem Fall kann auch vorgesehen sein, dass das zuvor beschriebene Verfahren durch das primäre Bremssystem und/oder das sekundäre Bremssystem und die Bremsbetätigungseinheit durchgeführt wird. Hierzu ist vorzugsweise das primäre Bremssystem mit dem sekundären Bremssystem verbunden, insbesondere über einen Datenbus.

Zur Durchführung wenigstens eines Teils des Verfahrens umfasst vorzugsweise das primäre Bremssystem ein erstes elektronisches Steuergerät, wobei das erste Steuergerät dazu ausgebildet ist, die Betätigungsinformationen hinsichtlich ihrer Gültigkeit und/oder Plausibilität zu prüfen und/oder das primäre Bremssystem zur Umsetzung einer Bremsanforderung anzusteuern. Alternativ oder zusätzlich kann ferner vorgesehen sein, dass das sekundäre Bremssystem ein zweites Steuergerät umfasst, wobei das zweite Steuergerät dazu ausgebildet ist, die Betätigungsinformationen hinsichtlich ihrer Gültigkeit und/oder Plausibilität zu prüfen und/oder das sekundäre Bremssystem zur Umsetzung einer Bremsanforderung anzusteuern. Je nach Ausgestaltung des Verfahrens können somit unterschiedliche Teilschritte des Verfahrens auch durch unterschiedliche Steuergeräte umgesetzt werden.

Dabei weist vorzugsweise die Bremsanlage eine erste Energieversorgung für das primäre Bremssystem und die erste Sensoranordnung und/oder eine zweite Energieversorgung für das sekundäre Bremssystem und die zweite Sensoranordnung auf.

Nach einer bevorzugten Ausführungsform weist das primäre Bremssystem eine dritte Sensoranordnung zur Bestimmung des durch das primäre Bremssystem erzeugten Bremsmoments auf, wobei das sekundäre Bremssystem dazu ausgebildet ist, die durch die dritte Sensoranordnung ermittelte Sensorinformationen auszulesen.

Vorzugsweise ist ferner das primäre Bremssystem als ein erstes elektrohydraulisches Bremsensteuergerät/-Bremsmodul ausgeführt und/oder das sekundäre Bremssystem als ein zweites elektrohydraulisches Bremsensteuergerät/Bremsmodul ausgeführt, wobei insbesondere das erste und das zweite Bremsensteuergerät/Bremsmodul räumlich getrennt ist.

Weiter weist vorzugsweise die Bremsbetätigungseinheit einen Pedalkraftsimulator, insbesondere einen hydraulischen Pedalkraftsimulator, auf.

Im Folgenden werden bevorzugte Ausgestaltungen der Erfindung anhand der Zeichnungen näher erläutert. Dabei zeigen

Figur 1    eine schematische Darstellung einer Bremsanlage,

Figur 2    schematische Darstellungen einer Bremsbetätigungseinheit mit unterschiedlichen Sensoranordnungen,

Figur 3    eine schematische Darstellung der Verbindung zwischen primärem Bremssystem und sekundärem Bremssystem, und

Figur 4    ein Funktionsschema zur Darstellung der Informationsstruktur.

Im Folgenden werden einander ähnliche oder identische Merkmale mit denselben Bezugszeichen gekennzeichnet.

In einer Ausgestaltung der Erfindung wird die eingangs formulierte Aufgabe durch die Kombination eines redundanten Bremssystems mit einer, vorzugsweise als elektronisches Bremspedal ausgeführten, Bremsbetätigungseinheit zur Fahrerwunscherfassung gelöst.

Diese Architektur ist zudem geeignet für modulare Fahrzeugkonzepte, bei denen Chassis und Aufbau flexibel kombinierbar sind und nur durch elektrische Schnittstellen verbunden sind.

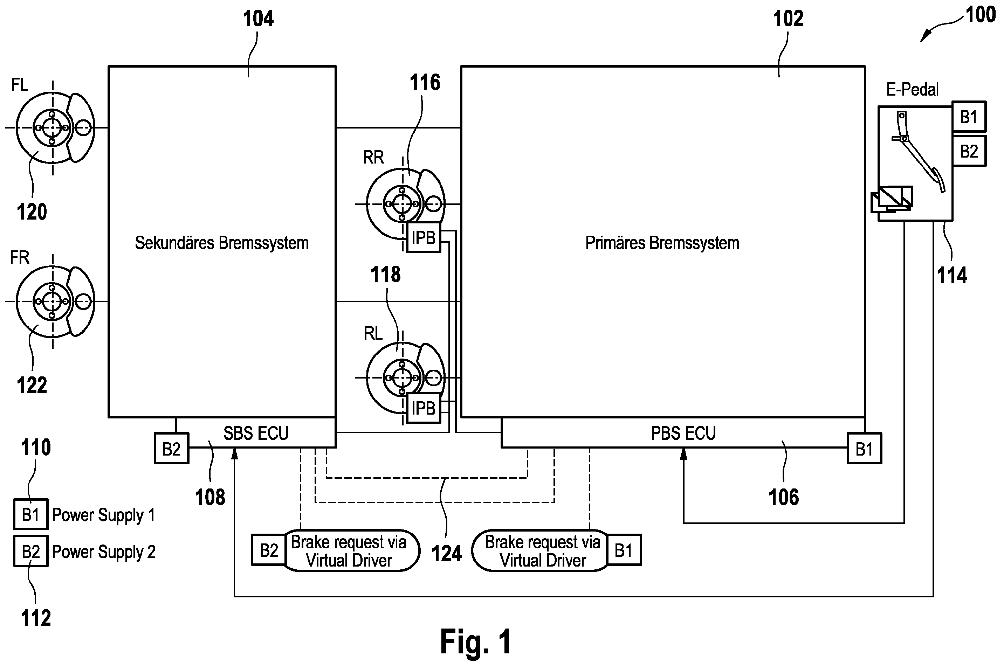

Vorteilhaft für die Anwendung dieser Architektur ist ein redundantes Bordnetz, d.h. eine unabhängige elektrische Energieversorgung des Haupt- und Backup-Bremssystems (primäres und sekundäres Bremssystem) und der jeweils angeschlossenen Sensoren bzw. Sensoranordnungen zur Fahrerwunscherfassung bzw. zur Erfassung von eine Bremsanforderung beschreibenden Betätigungsinformationen der Bremsbetätigungseinheit. Dabei ist die Bremsbetätigungseinheit hydraulisch/mechanisch von dem primären Bremssystem und dem sekundären Bremssystem entkoppelt. Dies wird im Folgenden mit Bezug auf die Figur 1 im Detail erläutert.

Die Figur 1 zeigt ein Ausführungsbeispiel der vorgeschlagenen Architektur einer Bremsanlage 100 basierend auf einer redundanten Architektur mit einem primären Bremssystem 102 (PBS) und einem sekundären Bremssystem 104 (SBS), wobei dem primären Bremssystem 102 das sekundäre Bremssystem 104 nachgeschaltet ist. Die Bremssysteme PBS und SBS können dabei sowohl (elektro)hydraulische Bremssysteme, als auch elektromechanische Bremssysteme sein. Die beiden Bremssysteme 102 und 104 verfügen jeweils über zugeordnete elektronische Steuergeräte (PBS ECU 106 und SBS ECU 108) und werden jeweils über separate Energieversorgungen (B1 bzw. Power Supply 1 110, B2 bzw. Power Supply 2 112) mit Strom versorgt. Aus Gründen der Übersichtlichkeit sind die Verbindungen zwischen den Energieversorgungen 110 und 112 und den versorgten Elementen der Bremsanlage 100 nicht dargestellt. Vielmehr ist durch die jeweiligen Buchstaben B1 und B2 gekennzeichnet, welche Elemente von welcher Energieversorgung 110 (B1) oder 112 (B2) gespeist werden.

Das primäre Bremssystem 102 ist dabei direkt mit den Radbremsen 116 und 118 einer Hinterachse des Fahrzeugs verbunden. Die Verbindung zwischen dem primären Bremssystem 102 und den Radbremsen 120 und 122 der Vorderachse des Fahrzeugs erfolgt dabei mittelbar über das sekundäre Bremssystem 104. Dabei ist vorzugsweise vorgesehen, dass ein von dem primären Bremssystem 102 für die Radbremsen 120 und 122 bereitgestellter Bremsdruck im Normalbetrieb der Bremsanlage 100 unverändert durch das sekundäre Bremssystem 104 hindurch zu den Radbremsen 120 und 122 geleitet wird. Erst bei einem Fehlerzustand der Bremsanlage 100, wie es im Folgenden noch erläutert wird, übernimmt das sekundäre Bremssystem 104 die Druckstellung für die Radbremsen 120 und 122 der Vorderachse.

Die Radbremsen 116 und 118 der Hinterachse sind dabei ferner jeweils mit einer integrierten Parkbremse (IPB) ausgestattet, wobei beide Parkbremsen jeweils von beiden Steuergeräten 108 und 106 steuerbar sind.

Ferner besteht eine Kommunikationsverbindung 124 zwischen dem Steuergerät 106 des primären Bremskreis 102 und dem Steuergerät 108 des sekundären Bremskreis 104, beispielsweise über einen entsprechend eingerichteten Datenbus.

Das primäre Bremssystem 102 mit dem Steuergerät 106 ist dabei vorzugsweise räumlich von dem sekundären Bremssystem 104 mit dem Steuergerät 108 getrennt.

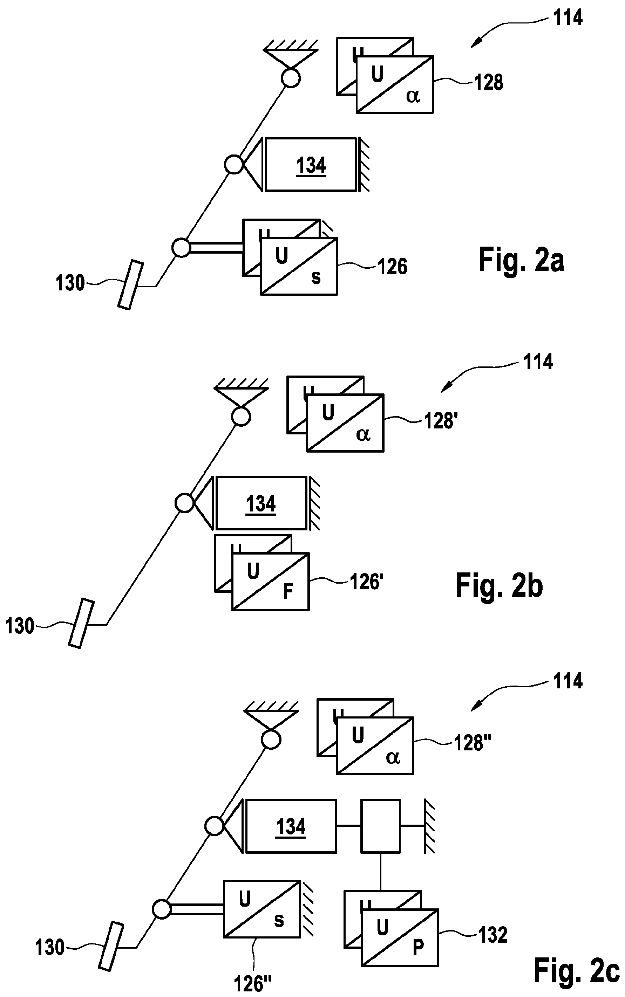

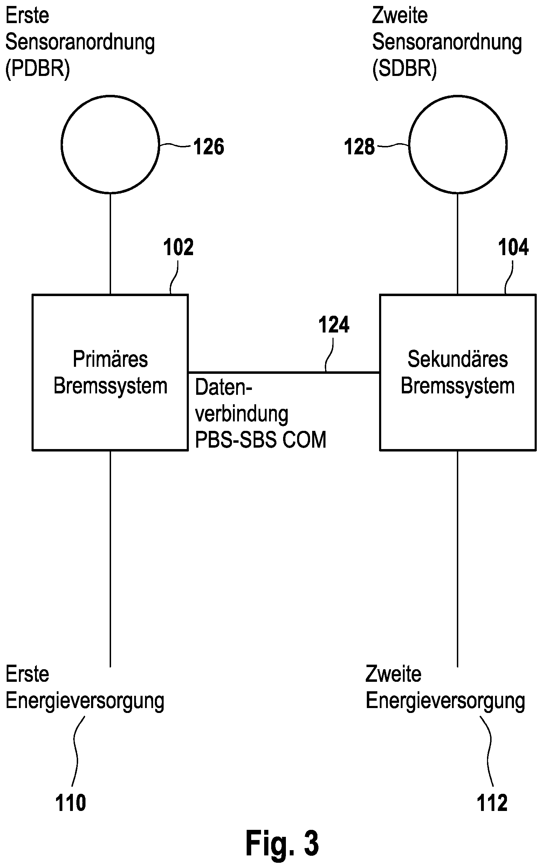

Zur Erfassung einer Bremsanforderung durch einen Fahrzeugführer weist die Bremsanlage 100 die Bremsbetätigungseinheit 114 auf. Die vorzugsweise als elektronisches Bremspedal (E-Pedal) ausgebildete Bremsbetätigungseinheit 114 umfasst eine Pedalschnittstelle, vorzugsweise einen Pedalkraftsimulator, sowie mindestes zwei unabhängige Sensoren zur Erfassung der Pedalbetätigung, d.h. zur Fahrerbremswunscherfassung. Beispielhafte Betätigungsanordnungen sind in den Figuren 2 und 3 dargestellt. Neben einer durch den Fahrzeugführer ausgelösten Bremsanforderung kann eine Bremsanforderung ferner auch durch eine Fahrfunktion, wie beispielsweise einen Autopilot ("virtual driver") ausgelöst werden. Derartige Bremsanforderungen werden von der entsprechenden Schnittstelle direkt an die beiden Steuergeräte 106 und 108 übermittelt.

Im Folgenden werden nun mit Bezug auf die Figur 2 unterschiedliche Varianten von Bremsbetätigungseinheiten 114 beschrieben. Gemein ist den dargestellten Bremsbetätigungseinheiten 114, dass sie jeweils mindestens eine erste Sensoranordnung 126 und eine zweite Sensoranordnung 128 aufweisen, die dazu ausgebildet sind, jeweils unabhängig voneinander eine Bremsanforderung aufgrund einer Betätigung eines Bremspedals 130 zu erfassen und eine entsprechende Betätigungsinformation zu ermitteln. Die beiden Sensoranordnungen 126 und 128 der Bremsbetätigungseinheiten 114 sind vorzugsweise jeweils eigensicher, d.h. ein fehlerhaftes Signal wird erkannt. Die genauen Sicherheitsanforderungen sind aus einer Gefahrenanalyse in der konkreten Anwendung abzuleiten, im allgemeinen Fall ist jedoch von einer ASIL D Anforderung nach ISO 26262 auszugehen. Dies bedeutet wiederum, dass die beiden Sensoren bzw. Sensoranordnungen 126 und 128 jeweils redundante Signalpfade enthalten müssen. Ferner weisen die Bremsbetätigungseinheiten 114 jeweils einen Pedalkraftsimulator 134 auf, der dazu ausgebildet ist, bei einer Betätigung des Bremspedals 130 eine Kraft auf das Bremspedal 130 zu bewirken, die der Betätigung des Bremspedals 130 entgegen gerichtet ist und in ihrem Kraft-Weg-Verhalten ein klassisches, hydraulisches Bremssystem imitiert.

Um *common-mode* Fehler zu vermeiden, bspw. gleichzeitiges Versagen beider Sensoranordnungen 126 und 128 aufgrund der gleichen elektromagnetischen Einstrahlung, werden vorzugsweise diversitäre Messprinzipien angewandt.

Hierzu zeigt die Figur 2 a) ein Ausführungsbeispiel einer Bremsbetätigungseinheit 114 mit jeweils redundantem Weg- und Winkelsensor. Hierbei wird beispielsgemäß der Wegsensor (s) als primäre (erste) Sensoranordnung 126 und der Winkelsensor ($\alpha$) als sekundäre (zweite) Sensoranordnung 128 betrachtet.

Unter einem redundanten Sensor bzw. einer redundanten Sensoranordnung wird dabei im Kontext dieser Erfindung eine Anordnung verstanden, bei der entweder die Signalerfassung, die Signalübertragung, oder sowohl die Signalerfassung, als auch die Signalübertragung jeweils mehrfach, mindestens jedoch doppelt ausgeführt sind.

Alternativ kann, wie in Figur 2 b) dargestellt, ein sekundäres Fahrerwunschsignal bzw. eine entsprechende Betätigungsinformation auch aus der Pedalkraft (F) mittels einer entsprechenden Sensoranordnung 126' abgeleitet werden. Die Messung der Kraft kann aus funktionalen Gründen vorteilhaft sein, da sich in der Regel eine bessere Auflösung bei hohen Werten des Fahrerwunschs ergibt ("Steiler Kennlinienast"). Kraftsensorik ist im Automobilbereich nicht verbreitet, eine Möglichkeit der indirekten Messung besteht jedoch in der Erfassung eines hydraulischen Drucks, wobei die E-Pedal Baugruppe dann hydraulische Komponenten umfasst ("nasser Simulator"), was u.U. nicht erwünscht ist. Vorteilhafterweise sollen nur trockene Komponenten im Fahrzeugaufbau, Hydraulik nur im Chassis verwendet werden. Eine entsprechende Ausgestaltung einer Bremsbetätigungseinheit 114 mit einem Drucksensor 132 ist in der Figur 2 c) dargestellt. Dabei ist der Drucksensor 132 als zusätzliche Sensoranordnung zu dem Winkelsensor 128" und dem Wegsensor 126' ausgeführt.

Das im Folgenden beschriebene Betriebskonzept, bzw. Verfahren zum Betrieb der zuvor beschriebenen Bremsanlage 100, ist generisch angesetzt, basiert also nicht auf einer konkreten technischen Ausführung der Sensorik. Es wird allerdings die Architekturannahme getroffen, dass eine primäre (erster) Sensoranordnung 126 (z.B. Kolbenstangenwegsensor) an das primäre Bremssystem 102 (PBS) und eine sekundäre Sensoranordnung 128 (z.B. Pedalwinkelsensor) an das sekundäre Bremssystem 104 (SBS) angeschlossen ist.

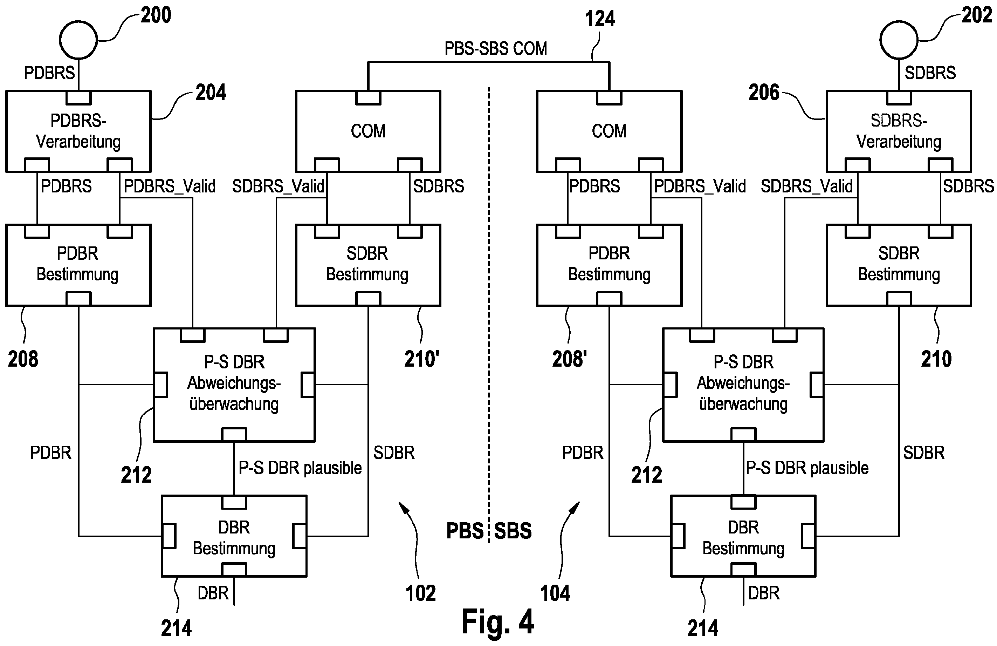

Weiterhin wird vom Vorhandensein einer Kommunikationsschnittstelle 124 (PBS-SBS COM) zwischen primärem Bremssystem 102 (PBS) und sekundärem Bremssystem 104 (SBS) sowie einer unabhängigen elektrischen Energieversorgung 110 und 112 aller primären und sekundären Baugruppen ausgegangen. Die Figur 4 verdeutlicht den zu Grunde liegenden generischen Architekturansatz.

Auf dieser Architektur basierend stehen beide Fahrerwunschsensorsignale (Betätigungsinformationen) in den elektronischen Steuergeräten 106 und 108 (SBS ECU, PBS ECU) beider Bremssysteme 102 und 104 zur Verfügung. Dies gilt sowohl für die Signalwerte der ersten Betätigungsinformation PDBRS 200 (Primary Driver Brake Request Signal), der zweiten Betätigungsinformation SDBRS 202 (Secondary Driver Brake Request Signal) als auch deren Gültigkeitsflags (Gültigkeits-Marker) PDBRS_Valid, SDBRS_Valid, die in einem ersten Verarbeitungsschritt 204 bzw. 206 ermittelt werden.

Diese Gültigkeitsflags nehmen den Wert "True" an, wenn das jeweilige Signal auf dem verarbeitenden Steuergerät als gültig erkannt wurde, sonst den Wert "False". Somit kann in der Verarbeitungslogik beider Steuergeräte 106 und 108 jeweils ein primärer Fahrerbremswunsch PDBR (erste Bremsanforderung) und ein sekundärer Fahrerbremswunsch SDBR (zweite Bremsanforderung) gebildet werden.

Diese Berechnung erfolgt in Schritt 208 bzw. 210 durch Anwendung einer primären (sensorspezifischen) Kennlinienfunktion PF auf das primäre Fahrerbremswunschsignal und einer sekundären (sensorspezifischen) Kennlinienfunktion SF auf das sekundäre Fahrerbremswunschsignal, d.h.

$$PDBR = PF(PDBRS)$$

$$SDBR = SF(SDBRS)$$

Sofern beide Signale gültig sind, d.h.

$$PDBRS\_Valid == True \,\&\&\, SDBRS\_Valid == True,$$

ist in Schritt 212 eine zusätzliche Plausibilitätsüberwachung anzuwenden, die prüft ob die Abweichung zwischen primärem und sekundärem Fahrerbremswunsch in den erwarteten Toleranzen liegt.

Durch diese zusätzliche Überwachungsebene können unerwartete Fehlermodi, die trotz der Sicherstellung der notwendigen Integritätslevel (ASIL Anforderungen) auftreten, abgefangen werden.

In der folgenden Tabelle wird definiert, wie der resultierende Fahrerbremswunsch vorteilhafterweise gebildet wird, in Abhängigkeit der Gültigkeit der Einzelsignale und dem Ergebnis der Plausibilitätsüberwachung.

| # | PDBRS_Valid | SDBRS_Valid | PDBR <-> SDBR Plausibel | DBR Ergebnis | Kommentar |
|---|---|---|---|---|---|
| 1 | ja | ja | ja | DBR = PDBR | Normalbetrieb |

(fortgesetzt)

| # | PDBRS_Valid | SDBRS_Valid | PDBR <-> SDBR Plausibel | DBR Ergebnis | Kommentar |
|---|---|---|---|---|---|
| 2 | ja | nein | n/a | DBR = PDBR | Bremswarnlicht an. Redundanz nicht mehr gegeben. Risikovermeidung auf Fahrzeugebene empfohlen |
| 3 | nein | ja | n/a | DBR = SDBR | |
| 4 | ja | ja | nein | DBR = 2,44 m/s$^2$ | Bremswarnlicht an. Kritischer Fehler. Fahrzeug sollte sofort angehalten werden. |
| 5 | nein | nein | n/a | DBR = 2,44 m/s$^2$ | |

Im fehlerfreien Normalbetrieb, Fall #1 der Tabelle, sind beide Signale gültig und ihre Plausibilität zueinander ist ebenfalls gegeben. Die Abweichung zwischen dem berechneten primären und sekundären Bremswunsch ist somit kleiner als ein Schwellwert, der sich aus den Toleranzen der Sensoren und den unterschiedlichen Funktionen PF, SF ergibt.

Im Normalbetrieb wird der resultierende Bremswunsch dann in Schritt 214 bspw. nur aus dem primären Sensor abgeleitet.

Sofern funktionale Gründe, z.B. eine bessere Auflösung des sekundären Signals bei hohen Werten des Bremswunschs für dessen Verwendung sprechen, kann alternativ auch eine Überblendung zwischen primären und sekundärem Fahrerbremswusch in Schritt 214 realisiert werden.

Sobald eines der Sensorsignale ungültig ist, Fälle #2 und #3 in der Tabelle, wird der resultierende Fahrerbremswunsch in Schritt 214 vorzugsweise aus dem verbliebenen gültigen Signal berechnet. In diesen Fällen steht keine weitere Redundanzebene innerhalb der Bremsanlage mehr zur Verfügung, so dass der Fahrer vorzugsweise über eine Bremsenwarnlampe informiert wird.

Es liegt dann in der Verantwortung des Fahrers, ob er die Fahrt mit roter Warnlampe fortsetzt oder beendet. Teil des Gesamtsicherheitskonzeptes auf Fahrzeugebene kann aber auch sein, das Risiko einer Weiterfahrt zu minimieren durch Maßnahmen wie

- Begrenzung der maximalen Fahrzeuggeschwindigkeit
- Begrenzung des maximalen Beschleunigungsvermögens
- Aktivieren eines erhöhten Motorschleppmomentes bzw. Generatorbremsmomentes beim Lösen des Fahrpedals

Der Fall #4 adressiert die unerwartete Situation, dass eine Plausibilitätsabweichung zwischen primärem und sekundärem Fahrerbremswunsch festgestellt wird, obwohl beide Sensoranordnungen 126 und 128 ein gültiges Signal liefern. In diesem Fall wird bevorzugt ein Default-Fahrerwunsch generiert, und das Fahrzeug mit einer vordefinierten Abbremsung zum Stillstand gebracht.

Um gleichzeitig die Sicherheitsziele gegen Unterbremsen wie gegen Überbremsen nicht zu verletzen, wird hierfür bevorzugterweise eine Abbremsung mit 2,44 m/s$^2$ durchgeführt.

Die gleiche Strategie kann auch im Zweitfehlerszenario, Fall #5, angewandt werden, d.h. wenn beide Fahrerwunschsensoren (nacheinander) ausfallen.

Das in Figur 4 dargestellte Blockdiagramm zeigt eine beispielhafte Realisierung eines Betriebskonzeptes zur Fahrerwunschbildung auf den elektronischen Steuergeräten des primären und sekundären Bremssystems. Die Verarbeitungslogik ist hierbei auf beiden Systemen gleich, sollte jedoch vorzugsweise unterschiedlich implementiert werden, um die Forderung nach Software-Diversität zu erfüllen.

Als Spezialfall kann die Unterbrechung der Kommunikation zwischen primärem und sekundärem Bremsensteuergerät betrachtet werden.

Wird auf dem primären Steuergerät 106 (PBS ECU) der Verlust der Kommunikation zum sekundären Steuergerät 108 (SBS ECU) festgestellt, entspricht dies dem Fall #2 in der Tabelle, d.h. die zweite Betätigungsinformation auf dem primären Steuergerät 106 ist ungültig. Das primäre Bremsensteuergerät 106 wird aber weiterhin den primären Fahrerbremswunsch aus der ersten Betätigungsinformation erfassen und diesen ausführen.

Stellt das sekundäre Steuergerät 108 den Verlust der Kommunikation zum primären Steuergerät 106 fest, sind zwei Szenarien möglich:

a) Es liegt eine Unterbrechung der Kommunikation vor, das primäre Bremssystem 102 ist aber intakt und führt den Fahrerbremswunsch weiterhin aus.

b) Das primäre Bremssystem 102 ist ausgefallen.

Um diese beiden Szenarien zu unterscheiden, enthält das sekundäre Bremssystem 104 vorzugsweise eine Überwachung des primären Bremssystems 102.

Hierzu verwendet das sekundäre Bremssystem 104 vorzugsweise eine interne Sensorik zur Erfassung des tatsächlich gestellten Bremsmoments (dritte Sensoranordnung). Z.B. ist diese dritte Sensoranordnung ein Drucksensor des primären Bremssystems 102 oder des sekundären Bremssystems 104.

Das tatsächlich gestellte Bremsmoment wird mit dem innerhalb des sekundären Bremssystems 104 berechneten sekundären Fahrerbremswunsch verglichen. Wird hierbei festgestellt, dass der Bremswunsch nicht oder nur unzureichend umgesetzt wird, also Szenario b) vorliegt, wird vorzugsweise das sekundäre Bremssystem 104 aktiv und führt den berechneten Bremswunsch aus.

Bevorzugt werden ein Systemansatz und ein Betriebskonzept für ein System nach dem brake-by-wire Prinzip vorgestellt, die ohne eine hydraulische Rückfallebene auskommen.

So werden vorteilhafterweise Anwendungsfälle des automatisierten Fahrens unterstützt, wobei auch im Fehlerfall eine Entkopplung des Bremspedals 130 aufrecht erhalten wird.

Vorteilhafterweise werden Fahrzeugkonzepte mit modularer Fahrwerks-/Aufbaugestaltung durch das Wegfallen mechanischer Schnittstellen vereinfacht.

**Patentansprüche**

1.  Verfahren zum Betrieb einer Bremsanlage (100) eines Fahrzeugs, wobei die Bremsanlage (100) ein primäres hydraulisches Bremssystem (102) und eine hydraulisch von dem primären Bremssystem (102) entkoppelte Bremsbetätigungseinheit (114) aufweist,

    wobei die Bremsbetätigungseinheit (114) wenigstens zwei Sensoranordnungen (126, 128) aufweist, die dazu ausgebildet sind, unabhängig voneinander eine Bremsanforderung beschreibende Betätigungsinformationen (200, 202) der Bremsbetätigungseinheit (114) zu erfassen,
    wobei das Verfahren die Schritte aufweist:

    • Ermitteln einer ersten Betätigungsinformation (200) durch eine erste der Sensoranordnungen (126),
    • Ermitteln einer zweiten Betätigungsinformation (202) durch eine zweite der Sensoranordnungen (128),
    • Prüfen (204, 206), ob die ermittelten Betätigungsinformationen (200, 202) jeweils gültig sind,
    • Prüfen (212), sofern die Betätigungsinformationen (200, 202) gültig sind, ob die ermittelten Betätigungsinformationen (200, 202) untereinander plausibel sind, und
    • Umsetzen der Bremsanforderung gemäß den Betätigungsinformationen (200, 202) und/oder Ausgeben einer Warnung und/oder Durchführen eines vordefinierten Bremsmanövers durch die Bremsanlage (100), in Abhängigkeit der Gültigkeit und Plausibilität der Betätigungsinformationen (200, 202),

    wobei das Fahrzeug mit einer vorbestimmten Verzögerung bis zum Stillstand verzögert und eine Warnung ausgegeben wird, wenn ermittelt wird, dass beide Betätigungsinformationen (200, 202) ungültig sind, oder beide Betätigungsinformationen (200, 202) gültig, aber nicht plausibel sind, und wobei die Gültigkeit einer Betätigungsinformation (200, 202) anhand einer sensorspezifischen Kennlinienfunktion (PF, SF) bestimmt wird, **dadurch gekennzeichnet, dass** die Bremsanlage (100) ein sekundäres hydraulisches Bremssystem (104) aufweist, wobei die erste Sensoranordnung (126) mit dem primären Bremssystem (102) und die zweite Sensoranordnung (128) mit dem sekundären Bremssystem (104) zur Datenübertragung und/oder Signalübertragung verbunden ist,
    wobei das primäre Bremssystem (102) oder das sekundäre Bremssystem (104) eine dritte Sensoranordnung zur Bestimmung des durch das primäre Bremssystem (102) erzeugten Bremsmoments aufweist, wobei das sekundäre Bremssystem (104) dazu ausgebildet ist, die durch die dritte Sensoranordnung ermittelte Sensorinformationen auszulesen, wobei das sekundäre Bremssystem (104) bei einer Unterbrechung der Kommunikation mit dem primären Bremssystem (102) prüft, ob die Sensorinformationen zu einer aus der zweiten Betätigungsinformation (202) ermittelten Bremsanforderung passt, und wobei in dem Fall, dass die Sensorinformation nicht zu der aus der zweiten Betätigungsinformation (202) ermittelten Bremsanforderung passt, das sekundäre Bremssystem (104) die aus der zweiten Betätigungsinformation (202) abgeleitete Bremsanforderung umsetzt.

2.  Verfahren nach Anspruch 1, **dadurch gekennzeichnet, dass** das sekundäre Bremssystem (104) dazu ausgebildet ist, bei einem Ausfall des primären Bremssystems (102) das Fahrzeug gemäß einer aus der zweiten Betätigungsinformation (202) bestimmten Bremsanforderung zu verzögern.

3. Verfahren nach Anspruch 1 oder 2, **dadurch gekennzeichnet, dass** das primäre Bremssystem (102) und das sekundäre Bremssystem (104) zur Datenübertragung miteinander verbunden und dazu ausgebildet sind, von den Sensoranordnungen (126, 128) empfangene Betätigungsinformationen (200, 202) miteinander auszutauschen.

4. Verfahren nach einem der vorherigen Ansprüche, **dadurch gekennzeichnet, dass**, wenn beide Betätigungsinformationen (200,202) gültig und plausibel sind, die Bremsanforderung nur aus der ersten Betätigungsinformation (200) abgeleitet wird.

5. Verfahren nach einem der vorherigen Ansprüche, **dadurch gekennzeichnet, dass** die Bremsanforderung aus der ersten (200) und der zweiten (202) Betätigungsinformation bestimmt wird, wobei eine Gewichtung der ersten (200) und zweiten (202) Betätigungsinformation bei der Bestimmung der Bremsanforderung von der Stärke der Bremsanforderung abhängt.

6. Verfahren nach einem der vorherigen Ansprüche, **dadurch gekennzeichnet, dass** die Plausibilität der Betätigungsinformationen (200, 202) ermittelt wird, indem geprüft wird, ob eine aus der ersten Betätigungsinformation (200) abgeleitete Bremsanforderung innerhalb einer festgelegten Toleranz um eine aus der zweiten Betätigungsinformation (202) abgeleiteten Bremsanforderung liegt.

7. Verfahren nach einem der vorherigen Ansprüche, **dadurch gekennzeichnet, dass** die Toleranz von Messtoleranzen der Sensoranordnungen (126, 128) und/oder sensorspezifischen Kennlinienfunktionen abhängt.

8. Verfahren nach einem der vorherigen Ansprüche, **dadurch gekennzeichnet, dass** die erste Sensoranordnung (126) eine Betätigungsinformation (200) aus einer ersten physikalischen Messgröße und die zweite Sensoranordnung (128) eine Betätigungsinformation (202) aus einer zweiten physikalischen Messgröße ableitet, wobei die erste physikalische Messgröße sich von der zweiten physikalischen Messgröße unterscheidet.

9. Bremsanlage (100) für ein Fahrzeug mit einem primären hydraulischen Bremssystem (102) und einer hydraulisch von dem primären Bremssystem (102) entkoppelten Bremsbetätigungseinheit (114), wobei die Bremsbetätigungseinheit (114) wenigstens zwei Sensoranordnungen (126, 128) aufweist, die dazu ausgebildet sind, unabhängig voneinander eine Bremsanforderung beschreibende Betätigungsinformationen (200, 202) der Bremsbetätigungseinheit (114) zu erfassen, wobei die Bremsanlage (100) ein sekundäres hydraulisches Bremssystem (104) aufweist, wobei die erste Sensoranordnung (126) mit dem primären Bremssystem (102) und die zweite Sensoranordnung (128) mit dem sekundären Bremssystem (104) zur Datenübertragung und/oder Signalübertragung verbunden ist,
wobei das primäre Bremssystem (102) oder das sekundäre Bremssystem (104) eine dritte Sensoranordnung zur Bestimmung des durch das primäre Bremssystem (102) erzeugten Bremsmoments aufweist, wobei das sekundäre Bremssystem (104) dazu ausgebildet ist, die durch die dritte Sensoranordnung ermittelte Sensorinformationen auszulesen, und wobei das primäre Bremssystem (102) und die Bremsbetätigungseinheit (114) dazu ausgebildet sind, das Verfahren nach Anspruch 1 oder einem der Ansprüche 4 bis 8 durchzuführen.

10. Bremsanlage (100) nach Anspruch 9, **dadurch gekennzeichnet, dass** die Bremsanlage (100) ein sekundäres hydraulisches Bremssystem (104) aufweist, wobei die erste Sensoranordnung (126) mit dem primären Bremssystem (102) und die zweite Sensoranordnung (128) mit dem sekundären Bremssystem (104) zur Datenübertragung verbunden ist und wobei das primäre Bremssystem (102) und/oder das sekundäre Bremssystem (104) dazu ausgebildet ist, das Verfahren nach einem der Ansprüche 1 bis 8 durchzuführen.

11. Bremsanlage (100) nach Anspruch 10, **dadurch gekennzeichnet, dass** das primäre Bremssystem (102) eine dritte Sensoranordnung zur Bestimmung des durch das primäre Bremssystem (102) erzeugten Bremsmoments aufweist, wobei das sekundäre Bremssystem (104) dazu ausgebildet ist, die durch die dritte Sensoranordnung ermittelte Sensorinformationen auszulesen.

**Claims**

1. A method for operating a braking system (100) of a vehicle, wherein the braking system (100) comprises a primary hydraulic braking system (102) and a brake actuation unit (114) hydraulically decoupled from the primary braking system (102), wherein the brake actuation unit (114) comprises at least two sensor arrangements (126, 128) which are configured to detect, independently of one another, pieces of actuation information (200, 202) of the brake actuation unit (114) describing a brake request,

wherein the method comprises the steps:

• determining a first piece of actuation information (200) by a first of the sensor arrangements (126),
• determining a second piece of actuation information (202) by a second of the sensor arrangements (128),
• checking (204, 206) whether the respective determined pieces of actuation information (200, 202) are valid,
• if the pieces of actuation information (200, 202) are valid, checking (212) whether the determined pieces of actuation information (200, 202) are mutually plausible, and
• implementing the brake request according to the pieces of actuation information (200, 202) and/or outputting a warning and/or performing a predefined braking man oeuvre by the braking system (100) depending on the validity and plausibility of the pieces of actuation information (200, 202),

wherein the vehicle is decelerated to a standstill with a predefined deceleration and a warning is output if it is determined that both pieces of actuation information (200, 202) are invalid or both pieces of actuation information (200, 202) are valid but implausible, and

wherein the validity of one piece of actuation information (200, 202) is determined on the basis of a sensor-specific characteristic curve function (PF, SF), **characterized in that** the braking system (100) comprises a secondary hydraulic braking system (104), wherein the first sensor arrangement (126) is connected to the primary braking system (102) and the second sensor arrangement (128) is connected to the secondary braking system (104) for data transmission and/or signal transmission,

wherein the primary braking system (102) or the secondary braking system (104) comprises a third sensor arrangement for the determination of the braking moment generated by the primary braking system (102), wherein the secondary braking system (104) is configured to read out the sensor information determined by the third sensor arrangement, wherein the secondary braking system (104), in the case of an interruption of communication with the primary braking system (102), checks whether the sensor information matches a brake request determined from the second piece of actuation information (202), and wherein, in the case that the sensor information does not match the brake request determined from the second piece of actuation information (202), the secondary braking system (104) implements the brake request derived from the second piece of actuation information (202).

2. The method as claimed in claim 1, **characterised in that** the secondary braking system (104) is configured to decelerate the vehicle according to a brake request determined from the second piece of actuation information (202) upon failure of the primary braking system (102).

3. The method as claimed in claim 1 or 2, **characterised in that** the primary braking system (102) and the secondary braking system (104) are interconnected for data transmission and are configured to exchange with one another pieces of actuation information (200, 202) received from the sensor arrangements (126, 128).

4. The method as claimed in any one of the preceding claims, **characterised in that**, if both pieces of actuation information (200,202) are valid and plausible, the brake request is derived only from the first piece of actuation information (200).

5. The method as claimed in any one of the preceding claims, **characterised in that** the brake request is determined from the first (200) and the second (202) pieces of actuation information, wherein a weighting of the first (200) and second (202) pieces of actuation information, upon the determination of the brake request, depends on the intensity of the brake request.

6. The method as claimed in any one of the preceding claims, **characterised in that** the plausibility of the pieces of actuation information (200, 202) is determined **in that** it is checked whether a brake request derived from the first piece of actuation information (200) lies within an established tolerance around a brake request derived from the second piece of actuation information (202).

7. The method as claimed in any one of the preceding claims, **characterised in that** the tolerance depends on measurement tolerances of the sensor arrangements (126, 128) and/or sensor-specific characteristic curve functions.

8. The method as claimed in any one of the preceding claims, **characterised in that** the first sensor arrangement (126) derives a piece of actuation information (200) from a first physical measurement parameter and the second sensor arrangement (128) derives a piece of actuation information (202) from a second physical measurement parameter, wherein the first physical measurement parameter differs from the second physical measurement parameter.

9. A braking system (100) for a vehicle with a primary hydraulic braking system (102) and a brake actuation unit (114) hydraulically decoupled from the primary braking system (102), wherein the brake actuation unit (114) comprises at least two sensor arrangements (126, 128) which are configured to detect, independently of one another, pieces of actuation information (200, 202) of the brake actuation unit (114) describing a brake request, wherein the braking system (100) comprises a secondary hydraulic braking system (104), wherein the first sensor arrangement (126) is connected to the primary braking system (102) and the second sensor arrangement (128) is connected to the secondary braking system (104) for data transmission and/or signal transmission, wherein the primary braking system (102) or the secondary braking system (104) comprises a third sensor arrangement for determining the braking moment generated by the primary braking system (102), wherein the secondary braking system (104) is configured to read out the sensor information determined by the third sensor arrangement and wherein the primary braking system (102) and the brake actuation unit (114) are configured to perform the method as claimed in claim 1 or any one of claims 4 to 8.

10. The braking system (100) as claimed in claim 9, **characterised in that** the braking system (100) comprises a secondary hydraulic braking system (104), wherein the first sensor arrangement (126) is connected to the primary braking system (102) and the second sensor arrangement (128) is connected to the secondary braking system (104) for data transmission and wherein the primary braking system (102) and/or the secondary braking system (104) are/is configured to perform the method as claimed in any one of claims 1 to 8.

11. The braking system (100) as claimed in claim 10, **characterized in that** the primary braking system (102) comprises a third sensor arrangement for determination of the braking moment generated by the primary braking system (102), wherein the secondary braking system (104) is configured to read out the sensor information determined by the third sensor arrangement.

**Revendications**

1. Procédé pour faire fonctionner une installation de freinage (100) d'un véhicule, dans lequel l'installation de freinage (100) présente un système de freinage hydraulique primaire (102) et une unité d'actionnement de freinage (114) hydrauliquement découplée du système de freinage primaire (102),

   dans lequel l'unité d'actionnement de freinage (114) présente au moins deux ensembles de capteurs (126, 128) conçus pour acquérir indépendamment l'un de l'autre des informations d'actionnement (200, 202) de l'unité d'actionnement de freinage (114) décrivant une exigence de freinage,
   dans lequel le procédé présente les étapes :

   • de détermination d'une première information d'actionnement (200) par un premier des ensembles de capteurs (126),
   • de détermination d'une seconde information d'actionnement (202) par un second des ensembles de capteurs (128),
   • de vérification (204, 206) visant à déterminer si les informations d'actionnement (200, 202) déterminées sont valides dans chaque cas,
   • de vérification (212), lorsque les informations d'actionnement (200, 202) sont valides, visant à déterminer si les informations d'actionnement (200, 202) obtenues sont plausibles entre elles, et
   • de mise en œuvre de l'exigence de freinage conformément aux informations d'actionnement (200, 202) et/ou d'émission d'un avertissement et/ou de réalisation d'une manœuvre de freinage prédéfinie par l'installation de freinage (100), en fonction de la validité et de la plausibilité des informations d'actionnement (200, 202),

   dans lequel le véhicule décélère avec une décélération prédéterminée jusqu'à l'arrêt et un avertissement est émis s'il est déterminé que les deux informations d'actionnement (200, 202) sont invalides, ou que les deux informations d'actionnement (200, 202) sont valides mais non plausibles, et dans lequel la validité d'une information d'actionnement (200, 202) est déterminée par une fonction de courbe caractéristique spécifique au capteur (PF, SF), **caractérisé en ce que** l'installation de freinage (100) présente un système de freinage hydraulique secondaire (104), dans lequel le premier ensemble de capteurs (126) est connecté au système de freinage primaire (102) et le deuxième ensemble de capteurs (128) est connecté au système de freinage secondaire (104) pour la transmission de données et/ou la transmission de signal,

dans lequel le système de freinage primaire (102) ou le système de freinage secondaire (104) présente un troisième ensemble de capteurs pour déterminer le couple de freinage généré par le système de freinage primaire (102), dans lequel le système de freinage secondaire (104) est conçu pour lire les informations de capteur obtenues par le troisième ensemble de capteurs, dans lequel le système de freinage secondaire (104) vérifie, lors d'une interruption de la communication avec le système de freinage primaire (102), que les informations de capteur correspondent à une exigence de freinage déterminée à partir de la seconde information d'actionnement (202), et dans lequel, dans le cas où les informations de capteur ne correspondent pas à l'exigence de freinage déterminée à partir de la seconde information d'actionnement (202), le système de freinage secondaire (104) met en œuvre l'exigence de freinage dérivée de la seconde information d'actionnement (202).

2. Procédé selon la revendication 1, **caractérisé en ce que** le système de freinage secondaire (104) est conçu pour décélérer le véhicule en cas de défaillance du système de freinage primaire (102) conformément à une exigence de freinage déterminée à partir de la seconde information d'actionnement (202).

3. Procédé selon la revendication 1 ou 2, **caractérisé en ce que** le système de freinage primaire (102) et le système de freinage secondaire (104) sont connectés pour la transmission de données et sont conçus pour échanger les informations d'actionnement (200, 202) reçues des ensembles de capteurs (126, 128).

4. Procédé selon l'une des revendications précédentes, **caractérisé en ce que**, si les deux informations d'actionnement (200, 202) sont valides et plausibles, l'exigence de freinage est dérivée uniquement de la première information d'actionnement (200).

5. Procédé selon l'une des revendications précédentes, **caractérisé en ce que** l'exigence de freinage est déterminée à partir de la première (200) et de la seconde (202) information d'actionnement, dans lequel une pondération de la première (200) et de la seconde (202) information d'actionnement lors de la détermination de l'exigence de freinage dépend de la force de l'exigence de freinage.

6. Procédé selon l'une des revendications précédentes, **caractérisé en ce que** la plausibilité des informations d'actionnement (200, 202) est déterminée par un examen déterminant si une exigence de freinage dérivée de la première information d'actionnement (200) respecte une tolérance spécifiée d'une exigence de freinage dérivée de la seconde information d'actionnement (202).

7. Procédé selon l'une des revendications précédentes, **caractérisé en ce que** la tolérance dépend des tolérances de mesure des ensembles de capteurs (126, 128) et/ou des fonctions de courbe caractéristique spécifiques au capteur.

8. Procédé selon l'une des revendications précédentes, **caractérisé en ce que** le premier ensemble de capteurs (126) tire une information d'actionnement (200) d'une première grandeur de mesure physique et le deuxième ensemble de capteurs (128) tire une information d'actionnement (202) d'une seconde grandeur de mesure physique, dans lequel la première grandeur de mesure physique diffère de la seconde grandeur de mesure physique.

9. Installation de freinage (100) pour un véhicule avec un système de freinage hydraulique primaire (102) et une unité d'actionnement de freinage (114) hydrauliquement découplée du système de freinage primaire (102), dans laquelle l'unité d'actionnement de freinage (114) présente au moins deux ensembles de capteurs (126, 128) conçus pour acquérir, indépendamment l'un de l'autre, des informations d'actionnement (200, 202) décrivant une exigence de freinage de l'unité d'actionnement de freinage (114), dans lequel l'installation de freinage (100) présente un système de freinage hydraulique secondaire (104), dans lequel le premier ensemble de capteurs (126) est connecté au système de freinage primaire (102) et le deuxième ensemble de capteurs (128) est connecté au système de freinage secondaire (104) pour la transmission de données et/ou la transmission de signal,

dans laquelle le système de freinage primaire (102) ou le système de freinage secondaire (104) présente un troisième ensemble de capteurs pour déterminer le couple de freinage généré par le système de freinage primaire (102), dans laquelle le système de freinage secondaire (104) est conçu pour lire les informations de capteur obtenues par le troisième ensemble de capteurs, et dans lequel le système de freinage primaire (102) et l'unité d'actionnement de freinage (114) sont conçus pour exécuter le procédé selon la revendication 1 ou l'une des revendications 4 à 8.

**10.** Installation de freinage (100) selon la revendication 9, **caractérisée en ce que** l'installation de freinage (100) présente un système de freinage hydraulique secondaire (104), dans laquelle le premier ensemble de capteurs (126) est connecté au système de freinage primaire (102) et le deuxième ensemble de capteurs (128) est connecté au système de freinage secondaire (104) pour la transmission de données, et dans laquelle le système de freinage primaire (102) et/ou le système de freinage secondaire (104) sont conçus pour réaliser le procédé selon l'une des revendications 1 à 8.

**11.** Installation de freinage (100) selon la revendication 10, **caractérisée en ce que** le système de freinage primaire (102) présente un troisième ensemble de capteurs pour déterminer le couple de freinage généré par le système de freinage primaire (102), dans laquelle le système de freinage secondaire (104) est conçu pour lire les informations de capteur déterminées par le troisième ensemble de capteurs.

**Fig. 1**

100

102 Primäres Bremssystem

104 Sekundäres Bremssystem

106 PBS ECU

108 SBS ECU

114 E-Pedal — B1 B2

116 RR — IPB

118 RL — IPB

120 FL

122 FR

124 Brake request via Virtual Driver — B1

Brake request via Virtual Driver — B2

110 Power Supply 1 — B1

112 Power Supply 2 — B2

15

**Fig. 2a**

**Fig. 2b**

**Fig. 2c**

Erste
Sensoranordnung
(PDBR)

Zweite
Sensoranordnung
(SDBR)

126

128

**102**

**104**

**124**

| Primäres | Daten- | Sekundäres |
| Bremssystem | verbindung | Bremssystem |
| | PBS-SBS COM | |

Erste
Energieversorgung

Zweite
Energieversorgung

**110**

**112**

# Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007035326 A1
- WO 0114195 A1
- DE 19510525 A1